# EUROPÄISCHE PATENTSCHRIFT

(11) **EP 0 731 139 B1**
(45) Veröffentlichungstag und Bekanntmachung des Hinweises auf die Patenterteilung: **12.06.2002**
(21) Anmeldenummer: 96102879.2
(22) Anmeldetag: 27.02.1996
(51) Int. Cl.: C08L 55/02, C08L 69/00

(54) **Schlagzähe ABS-Compounds mit säurefunktionellem Nitrilkautschuk**
Impact-resistant ABS compositions with acid functional nitrile rubber
Compositions d'ABS résistant au choc et de caoutchouc nitrile à fonction acide

(30) Priorität: 10.03.1995 DE 19508572; 29.09.1995 DE 19536377
(43) Veröffentlichungstag der Anmeldung: 11.09.1996
(73) Patentinhaber: BAYER AG, 51368 Leverkusen (DE)
(72) Erfinder: Tischer, Werner, 41542 Dormagen (DE); Köhler, Burkhard, Dr., 51373 Leverkusen (DE); Grigat, Ernst, Dr., 51381 Leverkusen (DE)

(56) Entgegenhaltungen:
- EP-A- 0 251 044
- EP-A- 0 558 263
- EP-A- 0 564 242
- EP-A- 0 590 969
- EP-A- 0 677 555
- US-A- 5 248 726

## Beschreibung

Die Erfindung betrifft Polymerlegierungen aus ABS-Polymerisaten, säurefunktionellen Nitrilkautschuken und Polyethersilikonen, die eine höhere Schlagzähigkeit und eine bessere Lichtbeständigkeit als herkömmliches ABS aufweisen.

ABS-Kunststoffe sind bekannt. Zusammenfassende Darstellungen finden sich in Ullmann's Enzyklopädie, Bd. 19, S. 277 ff. und in Roempp's Chemielexikon, 8. Auflage 1987, Bd. 1, S. 25 ff.

Für einige Anwendungen weisen ABS-Polymerisate auch nach Zusatz üblicher Stabilisatoren eine unbefriedigende UV-Stabilität auf. Ferner sind die mechanischen Eigenschaften, z.B. die Zähigkeit des Materials, nicht immer zufriedenstellend, insbesondere wenn zur Herstellung feinteilige Pfropfcopolymerisate verwendet werden.

Außerdem wurde gefunden, daß sich die Lichtbeständigkeit und die mechanischen Eigenschaften von ABS durch Zusatz von Polyethersilikonen und säurefunktionellen Ntrilkautschuken verbessern läßt, auch wenn die Pfropfgrundlage des ABS nur aus feinteiligem Polybutadien besteht

Gegenstand der Erfindung sind Polymerlegierungen aus
A) 90 bis 99,2 Gew.-Teilen ABS-Kunststoffen, wobei mindestens 70 % der Polybutadienpfropfgrundlage einen mittleren Teilchendurchmesser von 50 bis 300 µm aufweist, und
B) 0,8 bis 10 Gew.-Teilen einer Mischung aus
   B1) 20 bis 90 Gew.-% säurefunktionellem Nitrilkautschuk und
   B2) 10 bis 80 Gew.-% Polyethersilikonen
   der Formel (I) 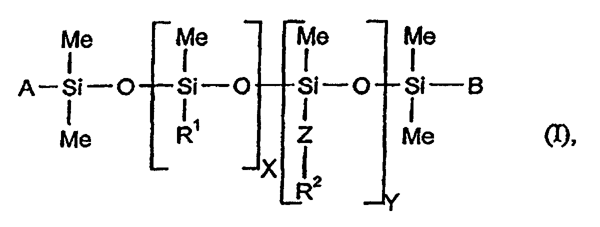 worin bedeuten:
   - R¹: eine Alkylgruppe mit 1 bis 30 C-Atomen, wobei bis zu 20 Gew.-% dieser Alkylgruppen ersetzt sein können durch Phenyl- und/oder Phenyl-Alkenyl-Gruppen, die jeweils durch eine oder mehrere Methylgruppen substituiert sein können, wobei die Alkenylgruppen 1 bis 3 Kohlenstoffatome enthalten können,
   - A: -CH₃ oder R²-Z-,
   - B: -CH₃ oder R²-Z-,
   - R²: einen Polyetherrest mit einem mittleren Molekulargewicht von 200 bis 3000,
   - Z: eine zweiwertige Gruppe, die das Siliciumatom mit der Gruppe R² verbindet,
   - x: 1 bis 250,
   - y: 0 bis 50,
   wobei das durchschnittliche Molekül mindestens eine Gruppe R²-Z- enthält und die Zahl der Gruppen R²-Z- zu der Zahl x 1:2 bis 1:40 beträgt,
   und
C) 0 bis 150 Gew.-Teilen Polycarbonaten.

In einer bevorzugten Ausführungsform bestehen die Polymerlegierungen aus
A) 94 bis 99 Gew.-Teilen ABS-Kunststoffen, wobei mindestens 70 % der Polybutadienpfropfgrundlage einen mittleren Teilchendurchmesser von 50 bis 300 µm aufweisen, und
B) 1 bis 6 Gew.-Teilen einer Mischung aus
   B1) 20 bis 90 Gew.-% säurefunktionellem Nitrilkautschuk und
   B2) 10 bis 80 Gew.-% Polyethersilikonen
   und
C) 0 bis 150 Gew.-Teilen Polycarbonaten.

Besonders bevorzugt besteht Komponente B) aus
B1) 50 bis 70 Gew.-% säurefunktionellem Nitrilkautschuk und
B2) 30 bis 50 Gew.-% Polyethersilikonen.

Mit ABS-Kunststoff wird im vorliegenden Zusammenhang ein Material bezeichnet, das aus
A1) 0 bis 90 Gew.-Teilen, bevorzugt 10 bis 80 Gew.-Teilen und besonders bevorzugt 20 bis 75 Gew.-Teilen eines oder mehrerer thermoplastischer Homo-, Co- oder Terpolymerisate, aufgebaut aus polymerisierten Vinylmonomeren, ausgewählt aus Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat und Mischungen daraus und
A2) 10 bis 100 Gew.-Teilen, bevorzugt 90 bis 20 Gew.-Teilen und besonders bevorzugt 25 bis 80 Gew.-Teilen eines oder mehrerer Pfropfprodukte aus
   A2₁) 5 bis 90 Gew.-Teilen, vorzugsweise 30 bis 80 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf
   A2₂) 95 bis 100 Gew.-Teile, vorzugsweise 70 bis 20 Gew.-Teile eines Kautschuks mit einer Glastemperatur ≤ 10°C.

Die Produkte A1) und A2) sind bekannt und z.B. in der Deutschen Offenlegungsschrift 3 808 844 näher beschrieben.

Bevorzugte Pfropfprodukte im Sinne der Erfindung sind Pfropfprodukte von Styrol und Acrylnitril auf Polybutadien, wobei im allgemeinen 50 bis 90 Gew.-% Styrol und 10 bis 50 Gew.-% Acrylnitril in der Mischung der Pfropfmonomeren vorhanden sind. Die Pfropfprodukte enthalten im allgemeinen 10 bis 30 Gew.-% Polybutadien in Form kleiner Teilchen. Im allgemeinen ist das Polybutadien vernetzt. Man kann diese Pfropfprodukte durch Polymerisation von Styrol und Acrylnitril in Gegenwart eines Polybutadienlatex erhalten. Im allgemeinen ist das Pfropfprodukt bereits ein Gemisch aus freiem Styrol/Acrylnitril-Copolymerisat und Kautschukteilchen, auf die Styrol und Acrylnitril pfropfpolymerisiert ist. Den Kautschukgehalt dieses Produktes kann man durch Zugeben von separat hergestelltem Styrolacrylnitril-Copolymerisat auf den gewünschten Wert einstellen. Diese Mischung ist hier als Pfropfpolymerisat bezeichnet.

Säurefunktionelle Nitrilkautschuke B1) sind Copolymerisate aus 10 - 50 Gew.-% Acrylnitril, 0,5 - 10 Gew.-% Acryl- oder Methylacrylsäure oder Fumarsäure oder Itaconsäure oder Maleinsäure oder Maleinsäuremonoalkylester, vorzugsweise Fumarsäure und 89,5 - 40 Gew.-% Butadien. Diese Copolymerisate sind ebenfalls bekannt.

Die Polyethersilikone B2) entsprechen der Formel (I) 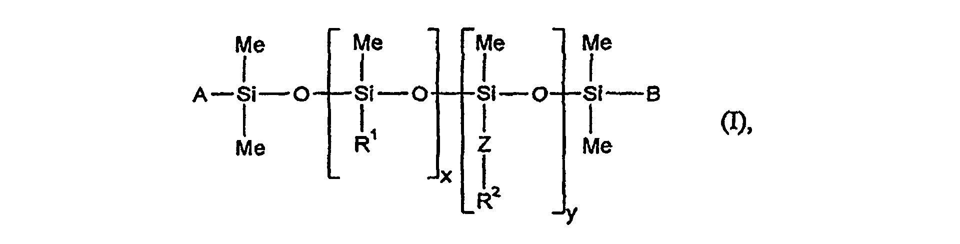 worin bedeuten:
- R¹: eine Alkylgruppe mit 1 bis 30 C-Atomen, wobei bis zu 20 Gew.-% dieser Alkylgruppen ersetzt sein können durch Phenyl- und/oder Phenyl-Alkenyl-Gruppen, die jeweils durch eine oder mehrere Methylgruppen substituiert sein können, wobei die Alkenylgruppen 1 bis 3 Kohlenstoffatome enthalten können,
- A: -CH₃ oder R²-Z-,
- B: -CH₃ oder R²-Z-,
- R²: einen Polyetherrest mit einem mittleren Molekulargewicht von 200 bis 3000. Bevorzugte Polyetherreste sind Polyethylenoxid-, Polypropylenoxid- und Polyethylenoxidpropylenoxidreste. Diese sind vorzugsweise durch C₁-C₆-Alkoxy, OH-, Ester- oder Carbamatgruppen terminiert.
- Z: eine zweiwertige Gruppe, die das Siliciumatom mit der Gruppe R² verbindet, vorzugsweise eine Alkylengruppe, besonders bevorzugt eine Propylengruppe,
- x: 1 bis 250, bevorzugt 1 bis 20, besonders bevorzugt 2 bis 7,
- y: 0 bis 50, vorzugsweise 1 bis 20,
wobei das durchschnittliche Molekül mindestens eine Gruppe R²-Z- enthält und die Zahl der Gruppen R²-Z- zu der Zahl x 1:2 bis 1:40 beträgt.

Sie sind unter der Bezeichnung BYK® (Hersteller BYK-Chemie GmbH, Wesel) oder unter der Bezeichnung Baysilone® (Bayer AG) im Handel erhältlich.

Das Symbol R¹ in der Formel (I) steht bevorzugt für Alkylgruppen mit 1 bis 30 C-Atomen, weil die entsprechenden Siloxane aus leicht zugänglichen Ausgangsstoffen herstellbar sind. Die Auswahl der Alkylgruppen hängt im wesentlichen ab vom gewünschten Verwendungszweck der Siloxane unter Berücksichtigung der Zusammensetzung der Lacke und Formmassen, in denen sie enthalten sind. Siloxane mit langen Alkylgruppen sind wachsartig und besonders geeignet für pulverförmige Lacke und Formmassen. Andererseits sind Siloxane, enthaltend niedere Alkylgruppen flüssig oder halbfest und eher geeignet für flüssige Lacke oder Formmassen. Die physikalische Konsistenz der Siloxane wird natürlich auch noch von anderen Parametern der Formel (I) bestimmt. Hierzu wird später noch Stellung genommen. Zweckmäßig sind Alkylgruppen mit bis zu 18, bevorzugt bis zu 12 und besonders bevorzugt bis zu 8 C-Atomen als solche für das Symbol R¹, weil diese eine bessere Wirkung hinsichtlich einer Erhöhung der Gleitfähigkeit bewirken als Siloxane, in denen das Symbol R¹ für Alkylgruppen mit einer größeren Zahl C-Atomen steht. Aus Gründen der leichten Zugänglichkeit ist die Methylgruppe besonders bevorzugt.

Ein Teil der Alkylgruppen kann ersetzt sein durch Phenyl- und/oder Phenylalkylengruppen, die jeweils durch eine oder mehrere Methylgruppen substituiert sein können, wobei die Alkylengruppen zweckmäßig 2 oder 3 Kohlenstoffatome enthalten. Zweckmäßig beträgt der Gehalt an derartigen Phenyl- und/oder Phenylalkylengruppen weniger als 10 Gew.-%, bezogen auf das Gesamtgewicht aus Alkylgruppen und Phenyl- und/oder Phenylalkylengruppen, für die das Symbol R¹ steht.

Die Polyethersilikone gemäß Formel (I) sind erhältlich aus den Siliconen der allgemeinen Formelen (II) bis (VI).

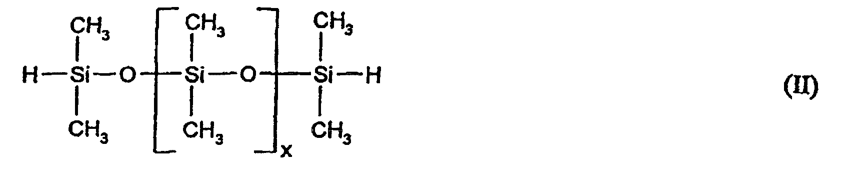

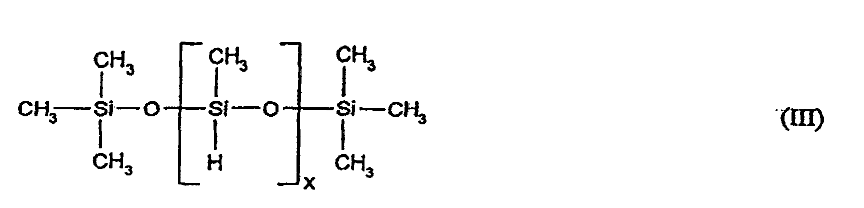

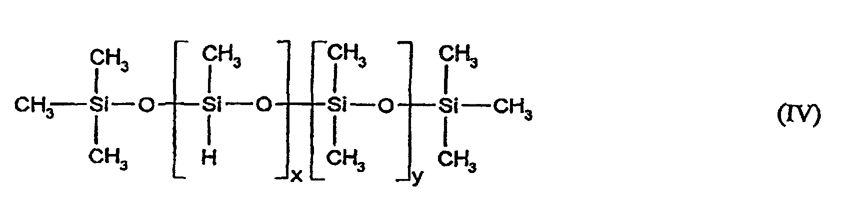

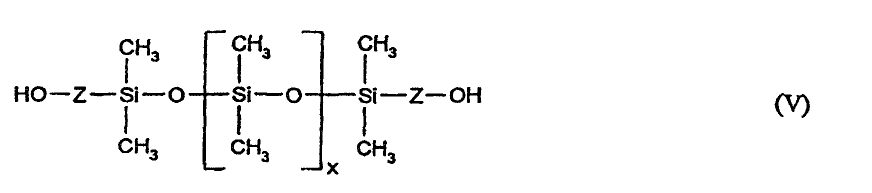

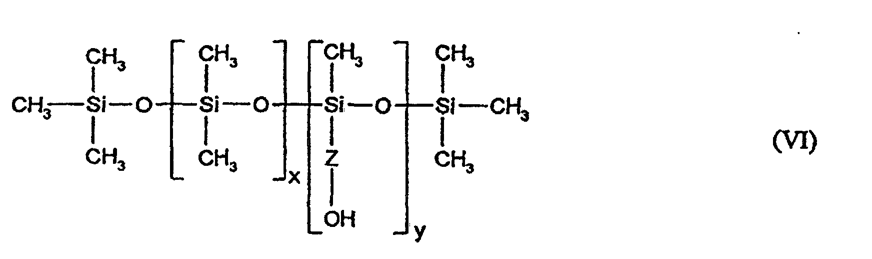

Die obige Formel (I) stellt eine mittlere Durchschnittsformel eines Polymerengemisches dar. Die in der Formel in eckigen Klammern angegebenen Gruppen liegen in statistischer Verteilung im Molekül vor.

Die polyethergepfropften Silikone der Formel (I) können aktive Wasserstoffatome enthalten oder nicht. Sie sind erhältlich durch Hydrosilylierungsreaktionen der SiH-funktionellen Siloxane der Formeln (II) oder (III) oder (IV) mit Polyethern der Formel (VII) 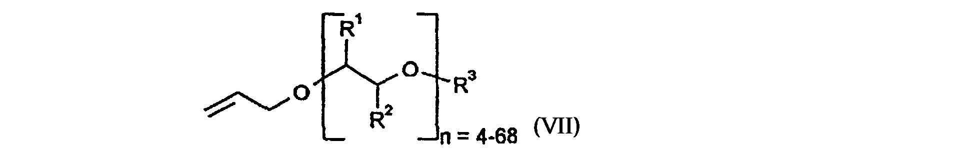 wobei
- R¹ und R²: für Wasserstoff oder C₁-C₆-Alkyl stehen und einer der Reste R¹ oder R² gleich Wasserstoff sein muß und
- R³: für Wasserstoff, C₁-C₆-Alkyl, C₇-C₁₄-Aralkyl oder C₆-C₁₄-Aryl oder für einen Acylrest oder Carbamoylrest steht.

Wenn R³ gleich Wasserstoff ist, können geringe Mengen an Produkten entstehen, die durch Reaktion der CH-Gruppen mit den SiH-Gruppen stärker verzweigt sind.

Die Polyether der Formel (VII) sind erhältlich durch anionische Polymerisation von Ethylenoxid und/oder Propylenoxid, gestartet auf Allylalkohol und gegebenenfalls anschließender Umsetzung mit Alkylierungs- oder Acylierungsreagenzien oder mit Isocyanaten, oder gestartet auf Alkoholen oder Phenolen und anschließender Umsetzung mit Allylhalogeniden.

Ferner sind die polyethergepfropften Silikone der Formel (I) erhältlich durch anionische Polymerisation von Ethylenoxid und/oder Propylenoxid, gestartet auf hydroxyfunktionellen Siloxanen der Formeln (V) oder (VI) und gegebenenfalls anschließender Umsetzung mit Alkylierungs- oder Acylierungsreagenzien oder Isocyanaten.

Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden aromatische Polyestercarbonate genannt Sie sollen im vorliegenden Zusammenhang von dem Begriff thermoplastische, aromatische Polycarbonate mit umfaßt werden.

Aromatische Polycarbonate können in bekannter Weise aus Diphenolen, Kohlensäurederivaten, gegebenenfalls Kettenabbrechern und gegebenenfalls Verzweigern hergestellt werden, wobei zur Herstellung von Polyestercarbonaten ein Teil der Kohlensäurederivate durch aromatische Dicarbonsäuren oder Derivate davon ersetzt werden, und zwar in dem Maße in dem aromatische Carbonatstruktureinheiten durch aromatische Dicarbonsäureesterstruktureinheiten ersetzt werden sollen.

Einzelheiten der Herstellung von Polycarbonaten sind in vielen Veröffentlichungen seit etwa 40 Jahren niedergelegt. Beispielhaft sei hier nur verwiesen auf: "Chemistry and Physics of Polycarbonates", Polymer Reviews, Volume 9, Interscience Publishers, 1964; "Synthesis of Poly(ester Carbonate) Copolymers" in Journal of Polymer Science, Polymer Chemistry Edition, Vol. 18, 75-90 (1980); "Polycarbonates" in Encyclopedia of Polymer Science and Engineering, Volume 11, Second Edition, 1988, Seiten 648-718 und "Polycarbonate" in Becker/Braun, Kunststoff-Handbuch, Band 3/1, Polycarbonate, Polyacetale, Polyester, Celluloseester, Carl Hanser Verlag 1992, Seiten 117-299.

Die thermoplastischen Polycarbonate einschließlich der thermoplastischen, aromatischen Polyestercarbonate haben mittlere Molekulargewichte Mw (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 18 000 bis 80 000 und insbesondere von 22 000 bis 60 000.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kemhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in "Chemistry and Physics of Polycarbonates, Interscience Publishers, New York 1964" sowie in den japanischen Offenlegungsschriften 62039/1986, 62040/1986 und 105550/1086 beschrieben.

Im Falle der Homopolycarbonate wird nur ein Diphenol eingesetzt, im Falte der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (I) 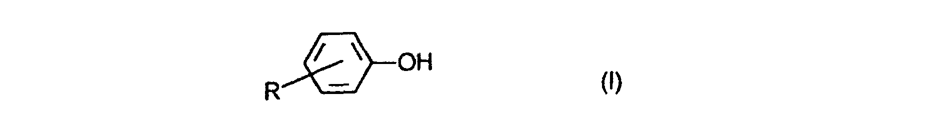 worin
- R: ein verzweigter oder unverzweigter C₈- und/oder C₉-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechem in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Einsatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu stabilisierenden Polycarbonate, einschließlich der Polyestercarbonate sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat.

Gegenstand der Erfindung ist auch die Herstellung der erfindungsgemäßen Polymerlegierungen. Die Komponenten werden in der Schmelze gemischt, vorzugsweise in Extrudern, Knetern oder Spritzgußmaschinen, bei Temperaturen von 160 bis 265°C.

Dabei können auch einzelne Bestandteile der Polymerlegierungen vorab gemischt werden; z.B. kann eine Komponente als Konzentrat in einer anderen Komponente der Mischung zugegeben werden.

Übliche anorganische oder organische Hilfsmittel, wie z.B. Pigmente, Antistatika, Stabilisatoren, Entformungsmittel oder Füll- oder Verstärkungsstoffe können allein oder als Konzentrat in einer Komponente der Mischung zugegeben werden. Auch können Bestandteile der Polymerlegierungen, gegebenenfalls unter Zusatz der anorganischen oder organischen Hilfsmittel, vorab durch Kompaktieren oder Verpressen vorgemischt werden.

Gegenstand der Erfindung ist weiterhin die Verwendung der erfindungsgemäßen Polymerlegierungen zur Herstellung von Formteilen durch Spritzguß oder Extrusion. Die Teile können für Haushaltsartikel, Spielzeug, Elektrogeräte oder in Kraftfahrzeugen eingesetzt werden.

### Beispiele

Folgende Ausgangsmaterialien wurden eingesetzt:
1. Pfropfcopolymerisat aus 25 Gew.-% Acrylnitril, 7 Gew.-% Styrol, 57 Gew.-% α-Methylstyrol und 11 Gew.-% Butadien, auf einem bimolaren Polybutadienlatex (50 % 100 µm und 50 % 400 µm) als Pfropfgrundlage.
2. Pfropfcopolymerisat aus 13 Gew.-% Acrylnitril, 32 Gew.-% Styrol auf 55 Gew.-% Butadien, wobei ein Polybutadienlatex mit einem mittleren Teilchendurchmesser von 400 µm als Pfropfgrundlage verwendet wird.
3. Pfropfcopolymerisat aus 13 Gew.-% Acrylnitril, 34 Gew.-% Styrol auf 53 Gew.-% Butadien, wobei ein bimolarer Polybutadienlatex (mittlerer Teilchendurchmesser: 50 % 100 µm und 50 % 400 µm) als Pfropfgrundlage dient.
4. Pfropfcopolymerisat aus 13 Gew.-% Acrylnitril, 34 Gew.-% Styrol auf 53 Gew.-% Butadien, wobei ein Polybutadienlatex mit einem mittleren Teilchendurchmesser von 100 µm als Pfropfgrundlage dient.
5. Styrol/Acrylnitril-Copolymerisat mit 28 Gew.-% Acrylnitrilgehalt und einer spezifischen Viskosität von 60 g/l (5 g/l, DMF 20°C).
6. Säurefunktioneller Nitrilkautschuk mit einem Säuregehalt von 7 Gew.-% und Acrylnitrilgehalt von 26 Gew.-%.
7. Säurefunktioneller Nitrilkautschuk mit einem Säuregehalt von 1 Gew.-% und Acrylnitrilgehalt von 32,5 Gew.-%.
8. Polyethersilikon der Formel (I) mit R¹, A und B = R²-Z, mit x = 6, y = 0 und mit einem Polyetherrest R² aus 6 Ethylenoxid- und 4-Propylenoxideinheiten. Das Polyethersilikon ist geringfügig über die OH-Gruppe des Polyethersegments verlängert.

Dieses Polyethersilikon wird wie folgt hergestellt:

Die Mischung aus 2 Molen des Polyethers 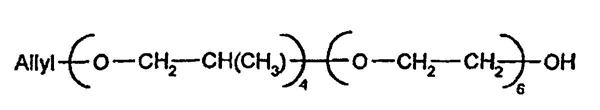 und einem Mol eines Siloxans der Formel II mit x = 6 und 30 ppm Hexachloroplatinsäure wird unter kräftigem Rühren 24 h auf 110°C erhitzt.

In den folgenden Beispielen sind Teile immer Gewichtsteile. Die Mischungen wurden durch gemeinsame Extrusion der Bestandteile hergestellt.

### Vergleichsbeispiel 1

Hergestellt wurde eine Mischung aus 82 Teilen 1), 13 Teilen 2), 5 Teilen 5) und 2 Teilen Entformungsmittel.
Kerbschlagzähigkeit: 18,5 kJ/m²

### Vergleichsbeispiel 2

Hergestellt wurde eine Mischung aus 82 Teilen 1), 13 Teilen 2), 5 Teilen 5), 2 Teilen Entformungsmittel und 1 Teil Flammruß.
Kerbschlagzähigkeit: 15,0 kJ/m²

### Vergleichsbeispiel 3

Hergestellt wurde eine Mischung aus 82 Teilen 1), 13 Teilen 2), 5 Teilen 5), 2 Teilen Entformungsmittel und 1 Teil Flammruß mit 3 Teilen 6).
Kerbschlagzähigkeit: 23,3 kJ/m²

### Beispiel 1

Hergestellt wurde eine Mischung aus 82 Teilen 1), 13 Teilen 2), 5 Teilen 5), 2 Teilen Entformungsmittel und 1 Teil 8) und 1 Teil Flammruß mit 3 Teilen 6).
Kerbschlagzähigkeit: 29,3 kJ/m²

### Vergleichsbeispiel 4

Hergestellt wurde eine Mischung aus 65 Teilen 5), 35 Teilen 3), 18 Teilen Tetrabrombisphenol A, 8 Teilen Antimontrioxid und 2 % Teflon-ABS-Pfropfcopolymerisat.
Kerbschlagzähigkeit: 7,3 kJ/m²

In den folgenden Beispielen wurden die Mischungen durch gemeinsames Kneten der Bestandteile bei 170 bis 200°C hergestellt.

### Beispiel 2

Man mischt 70 Teile 5), 30 Teile 3) und 2 Teile Pentaerythrittetrastearat. Man erhält eine Kerbschlagzähigkeit (ISO ak) von 7,6 kJ/m². Der Zusatz von 3 Teilen 6) und 1,5 Teilen 8) verbessert die Kerbschlagzähigkeit auf 24,7 kJ/m².

### Beispiel 3

Man mischt 70 Teile 5), 30 Teile 3) und 2 Teile Pentaerythrittetrastearat. Man erhält eine Kerbschlagzähigkeit (ISO ak) von 18,2 kJ/m². Der Zusatz von 3 Teilen 6) und 1,5 Teilen 8) verbessert die Kerbschlagzähigkeit auf 26,8 kJ/m².

### Beispiel 4

Man mischt 70 Teile 5), 30 Teile 4) und 2 Teile Pentaerythrittetrastearat. Man erhält eine Kerbschlagzähigkeit (ISO ak) von 2,2 kJ/m².
Der Zusatz von 3 Teilen 6) und 1,5 Teilen 8) verbessert die Kerbschlagzähigkeit (ISO ak) auf 18 kJ/m².

### Beispiel 5 (nicht erfindungsgemäß)

Man mischt 70 Teile 5), 30 Teile 4), 4,15 Teile Verarbeitungshilfsmittel und 2 Teile Rutil. Man erhält eine Kerbschlagzähigkeit von 5,1 kJ/m² und eine Farbabweichung im 5-stündigem Schnellbewitterungstest (Xenon-Lampe) von 0,92.

### Beispiel 6 (nicht erfindungsgemäß)

Man mischt 70 Teile 5), 30 Teile 4), 4,15 Teile Verarbeitungshilfsmittel und 2 Teile Rutil, 0,5 Teile Tinuvin P (UV-Stabilisator vom Typ der Benztriazole), 0,5 Teile Trinonylphosphit (Antioxidans) und 0,2 Teile ZKF (Radikalfänger vom Typ der sterisch gehinderten Phenole). Man erhält eine Kerbschlagzähigkeit von 4,2 kJ/m² und eine Farbabweichung im 5-stündigen Schnellbewitterungsstest (Xenon-Lampe) von 0,87.

### Beispiel 7

Man mischt 70 Teile 5), 30 Teile 4), 4,15 Teile Verarbeitungshilfsmittel, 2 Teile Rutil, 3 Teile 6) und 1,5 Teile 8). Man erhält eine Kerbschlagzähigkeit von 22,0 kJ/m² und eine Farbabweichung im 5-stündigen Schnellbewitterungstest (Xenon-Lampe) von 0,82.

## Patentansprüche

1. Polymerlegierungen aus
A) 90 bis 99,2 Gew.-Teilen ABS-Kunststoffen, wobei mindestens 70 % der Polybutadienpfropfgrundlage einen mittleren Teilchendurchmesser von 50 bis 300 µm aufweist, und
B) 0,8 bis 10 Gew.-Teilen einer Mischung aus
B1) 20 bis 90 Gew.-% säurefunktionellem Nitrilkautschuk und
B2) 10 bis 80 Gew.-% Polyethersilikonen
der Formel (I) 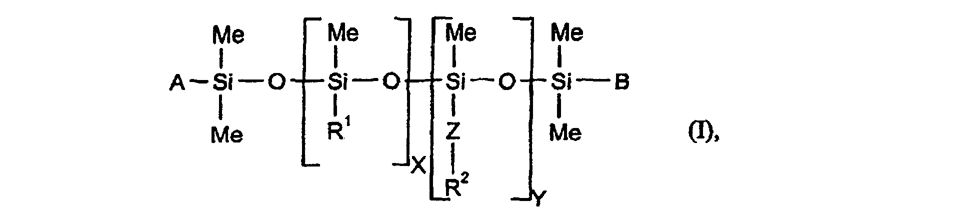 worin bedeuten:
R¹ eine Alkylgruppe mit 1 bis 30 C-Atomen, wobei bis zu 20 Gew.-% dieser Alkylgruppen ersetzt sein können durch Phenyl- und/oder Phenyl-Alkenyl-Gruppen, die jeweils durch eine oder mehrere Methylgruppen substituiert sein können, wobei die Alkenylgruppen 1 bis 3 Kohlenstoffatome enthalten können,
A -CH₃ oder R²-Z-,
B -CH₃ oder R²-Z-,
R² einen Polyetherrest mit einem mittleren Molekulargewicht von 200 bis 3000,
Z eine zweiwertige Gruppe, die das Siliciumatom mit der Gruppe R² verbindet,
x 1 bis 250,
y 0 bis 50,
wobei das durchschnittliche Molekül mindestens eine Gruppe R²-Z- enthält und die Zahl der Gruppen R²-Z- zu der Zahl x 1:2 bis 1:40 beträgt,
und
C) 0 bis 150 Gew.-Teilen Polycarbonaten.

2. Polymerlegierungen gemäß Anspruch 1, wobei der Polyetherrest R² in Formel (I) ein Polyethylenoxid-, Polypropylenoxid- oder Polyethylenoxidpropylenoxidrest ist.

3. Polymerlegierungen gemäß Anspruch 1 oder 2, wobei die Gruppe Z in Formel (I) eine Alkylengruppe ist.

4. Polymerlegierungen gemäß Anspruch 1 bis 3, enthaltend als ABS-Kunststoff
A1) 0 bis 90 Gew.-Teile eines oder mehrerer thermoplastischer Homo-, Co- oder Terpolymerisate, aufgebaut aus polymerisierten Vinylmonomeren, ausgewählt aus Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat und Mischungen daraus und
A2) 10 bis 100 Gew.-Teile eines oder mehrerer Pfropfprodukte aus
A2₁) 5 bis 90 Gew.-Teile Styrol, α-Methylstyrol, kemsubstituiertem Styrol, Methylmethacrylat, Acrylnitril, Methacrylnitril, Maleinsäureanhydrid, N-substituiertem Maleinimid, Vinylacetat oder Mischungen daraus auf
A2₂) 95 bis 100 Gew.-Teile eines Kautschuks mit einer Glastemperatur ≤ 10°C.

5. Verfahren zur Herstellung der Polymerlegierungen gemäß Anspruch 1 bis 4, bei dem die Komponenten in der Schmelze bei Temperaturen von 160°C bis 265°C gemischt werden.

6. Verwendung der Polymerlegierungen gemäß Anspruch 1 bis 5 zur Herstellung von Formteilen durch Spritzguß oder Extrusion.

7. Formteile erhältlich aus Polymerlegierungen gemäß Anspruch 1 bis 5.

## Claims

1. Polymer blends comprising
A) 90 to 99.2 parts by wt. of ABS plastics, wherein at least 70 % of the polybutadiene graft substrate has an average particle diameter of 50 to 300 µm, and
B) 0.8 to 10 parts by wt. of a mixture of
B1) 20 to 90 wt.% of acid-functional nitrile rubber and
B2) 10 to 80 wt.% of polyethersilicones
of the formula (I) 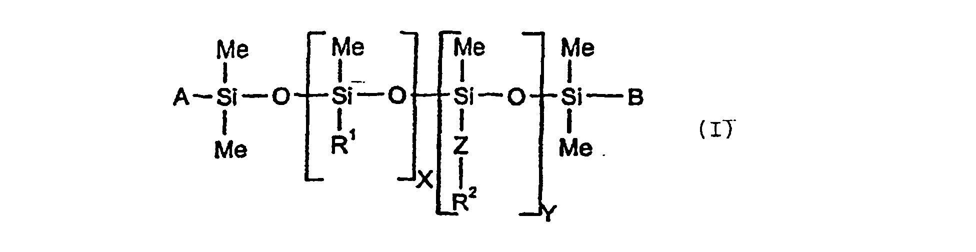 in which:
R¹ represents an alkyl group with 1 to 30 carbon atoms, wherein up to 20 wt.% of these alkyl groups may be replaced by phenyl and/or phenylalkenyl groups, each of which may be substituted by one or more methyl groups, wherein the alkenyl groups may contain 1 to 3 carbon atoms,
A represents -CH₃ or R²-Z-,
B represents -CH₃ or R²-Z-,
R² represents a polyether group with an average molecular weight of 200 to 3000,
Z represents a divalent group which links the silicon atom to the group R²,
x is 1 to 250,
y is 0 to 50,
wherein the average molecule contains at least one R²-Z- group and the number of R²-Z groups to the number x is 1:2 to 1:40,
and
C) 0 to 150 parts by wt. of polycarbonates.

2. Polymer blends according to claim 1, wherein the polyether group R² in formula (I) is a polyethylene oxide, polypropylene oxide or polyethylene oxide/polypropylene oxide group.

3. Polymer blends according to claim 1 or 2, wherein the group Z in formula (I) is an alkylene group.

4. Polymer blends according to claims 1 to 3 containing, as an ABS plastics material,
A1) 0 to 90 parts by wt. of one or more thermoplastic homopolymers, copolymers or terpolymers built up from polymerised vinyl monomers chosen from styrene, α-methylstyrene, ring-substituted styrene, methyl methacrylate, acrylonitrile, methacrylonitrile, maleic anhydride, N-substituted maleic imide, vinyl acetate and mixtures thereof and
A2) 10 to 100 parts by wt. of one or more graft products of
A2₁) 5 to 90 parts by wt. of styrene, α-methylstyrene, ring-substituted styrene, methyl methacrylate, acrylonitrile, methacrylonitrile, maleic anhydride, N-substituted maleic imide, vinyl acetate or mixtures thereof on
A2₂) 95 to 100 parts by weight of a rubber with a glass transition temperature of ≤10°C.

5. A process for preparing polymer blends in accordance with claims 1 to 4, in which the components are mixed in the molten form at temperatures of 160°C to 265°C.

6. Use of polymer blends in accordance with claims 1 to 5 to produce moulded items by injection moulding or extrusion.

7. Moulded items obtainable from polymer blends according to claims 1 to 5.

## Revendications

1. Compositions polymères en :
A) 90 à 99,2 parties en poids de matières plastiques ABS, où au moins 70% de la base de greffage polybutadiène présente un diamètre moyen des particules allant de 50 à 300 µm, et
B) 0,8 à 10 parties en poids d'un mélange de
B1) 20 à 90% en poids d'un caoutchouc nitrile à fonctions acides, et
B2) 10 à 80% en poids d'un polyéthersilicone de formule (I) : 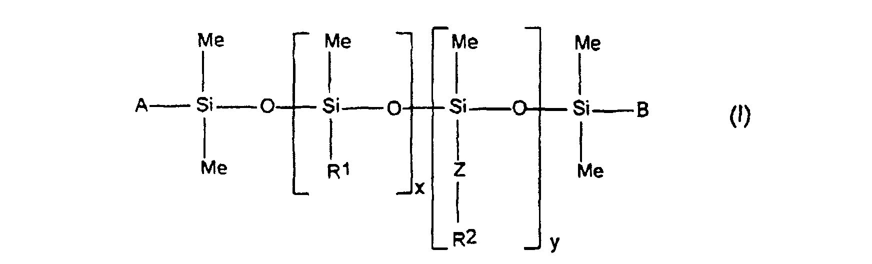
où
R¹ représente un radical alcoyle ayant 1 à 30 atomes C, où jusqu'à 20% en poids de ces radicaux alcoyle peuvent être remplacés par des radicaux phényle et/ou phénylalcényle, qui peuvent être chaque fois, substitués par un ou plusieurs radicaux méthyle, où les radicaux alcényle peuvent contenir 1 à 3 atomes de carbone ;
A représente -CH₃ ou R²-Z- ;
B représente -CH₃ ou R²-Z- ;
R² représente un reste polyéther avec un poids moléculaire moyen allant de 200 à 3000 ;
Z représente un radical bivalent qui relie l'atome de silicium au radical R² ;
x représente 1 à 250, et
y représente 0 à 50,
où la molécule moyenne contient au moins un radical R²-Z- et le nombre de radicaux R²-Z- par rapport au nombre x se situe dans l'intervalle allant de 1:2 à 1:40, et
C) 0 à 150 parties en poids de polycarbonate.

2. Compositions polymères suivant la revendication 1, où le reste polyéther R² dans la formule (I) est un reste poly(oxyde d'éthylène), un reste poly(oxyde de propylène) ou un reste poly(oxyde d'éthylène-oxyde de propylène).

3. Compositions polymères suivant la revendication 1 ou 2, où le radical Z dans la formule (I) est un radical alcoyiène.

4. Compositions polymères suivant les revendications 1 à 3, contenant comme matières plastiques ABS
A1) 0 à 90 parties en poids d'un ou de plusieurs homo-, co- ou terpolymères thermoplastiques, élaborés à partir de monomères vinyliques polymérisés, choisis parmi le styrène, l'α-méthylstyrène, les styrènes substitués sur le noyau, le méthacrylate de méthyle, l'acrylonitrile, le méthacrylonitrile, l'anhydride maléique, un maléinimide N-substitué, l'acétate de vinyle et des mélanges de ceux-ci, et
A2) 10 à 100 parties en poids d'un ou de plusieurs produits greffés de
A2₁) 5 à 90 parties en poids de styrène, d'α-méthylstyrène, de styrènes substitués sur le noyau, de méthacrylate de méthyle, d'acrylonitrile, de méthacrylonitrile, d'anhydride maléique, de maléinimide N-substitué, d'acétate de vinyle ou de mélanges de ceux-ci,
A2₂) 95 à 100 parties en poids d'un caoutchouc avec une température de transition vitreuse ≤ 10°C.

5. Procédé de préparation de compositions polymères suivant les revendications 1 à 4, dans lequel les composants sont mélangés à l'état fondu à des températures allant de 160°C à 265°C.

6. Utilisation des compositions polymères suivant les revendications 1 à 5, pour la préparations d'articles moulés par injection ou par extrusion.

7. Articles moulés pouvant être obtenus à partir des compositions polymères suivant les revendications 1 à 5.
